Europäisches Patentamt

European Patent Office

Office européen des brevets

(11) Publication number: **0 028 140**
**B1**

(12)     EUROPEAN PATENT SPECIFICATION

(45) Date of publication of patent specification: **19.09.84**          (51) Int. Cl.³: **F 16 H 5/46** // B62M11/14

(21) Application number: **80303770.4**

(22) Date of filing: **24.10.80**

(54) Automatic transmissions.

(30) Priority: **26.10.79 JP 138531/79**

(43) Date of publication of application:
**06.05.81 Bulletin 81/18**

(45) Publication of the grant of the patent:
**19.09.84 Bulletin 84/38**

(84) Designated Contracting States:
**DE FR GB**

(56) References cited:
**DE-B-2 454 433**
**FR-E- 10 293**
**GB-A-1 542 474**
**US-A-3 884 097**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Hamane, Masumi**
**2-2-21, Minamidai**
**Kawagoe-shi Saitama-ken (JP)**
Inventor: **Ohri, Hiroshi**
**4-11-13, Hon-cho**
**Shiki-shi Saitama-ken (JP)**

(74) Representative: **MacFarlane, John Anthony Christopher et al**
**HASELTINE LAKE & CO. Hazlitt House 28,**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to automatic transmissions. It is particularly concerned with an automatic transmission that includes a planetary gear mechanism, a centrifugally operated clutch and a one-way clutch, in which the one-way clutch controls rotation of a gear forming a part of the planetary gear mechanism so that the planetary gear mechanism may be automatically varied in speed in response to operation of the centrifugally operated clutch.

In DE—B—24 54 433 there is disclosed a ratchet type one-way clutch, in an automatic transmission, which comprises a rotation shaft having a pedal at one end and a ratchet wheel at the other end, the ratchet wheel being engaged with a pawl pivoted to a stationary member so that it is permitted to rotate in one direction but checked from rotation in the other direction, and a planetary gear mechanism including an internally toothed ring gear rotatably mounted on the rotation shaft and having a drive wheel fixed thereto which is drivingly connected to a motor by means of a V-belt transmission, a plurality of planetary gears rotatably supported on a web integral with a hub rotatably mounted on the rotation shaft, the hub having a driven wheel splined thereto so as to be fast in rotation therewith for driving a rear wheel, and a sun gear engaged with the planetary gears and splined onto a hollow boss which is mounted through a free wheel on the rotation shaft for unidirectional rotation. Centrifugal clutches are pivoted to the web so that they are centrifugally operated to connect the web and the drive wheel for rotation together when the rotation speed of the web exceeds a predetermined level. A pair of diametrically opposed pawls are pivoted to the web for engagement with a ratchet wheel integrally formed with the ring gear for unidirectionally transmitting rotational force from the web to the drive wheel. With this arrangement, when the pedal is rotated for starting the motor, rotational force is transmitted from the pedal to the drive wheel by way of rotation shaft, free wheel, hollow boss, sun gear, planetary gears, web, pawls and ratchet wheel, and from the drive wheel to the motor through a V-belt for starting of the motor. Thereafter, when the rotation speed of the motor exceeds that of the pedal, the drive wheel is rotated by the motor at a speed greater than that of the web whereby power is transmitted from the drive wheel to the driven wheel for driving the rear wheel at a reduced speed by way of the ring gear integral with the drive wheel, planetary gears, web and the hub. In this speed-reducing transmission, the sun gear is connected with the rotation shaft for rotation therewith and hence is checked from rotation by means of the pawl engaging the ratchet wheel. When the motor speed exceeds a predetermined value, the centrifugal clutches are centrifugally operated to connect the web and the drive wheel together for rotation together so that power is transmitted from the drive wheel to the driven wheel without any speed reduction by way of the centrifugal clutches, web and the hub. In this operating or connected state of the centrifugal clutches, when the rotation speed of the web is reduced below the aforementioned predetermined value, the centrifugal clutches are deactuated into their disconnected state and at the same time the rotation of the sun gear is stopped by the pawl engaging the ratchet wheel. It is to be noted that the pair of diametrically opposite pawls are mounted on the web and only act to transmit rotation force from the web to the drive wheel for starting of the motor and never act to stop rotation of the sun gear during the speed-reducing operation of the planetary gear mechanism. As regards the pawl which cooperates with the ratchet wheel to permit unidirectional rotation of the sun gear, and hence serves as a one-way clutch, it is to be noted that when the centrifugal clutches are in the connected condition to transmit power from the drive wheel to the web through the centrifugal clutches, the sun gear rotates freely relative to the rotation shaft by the action of the free wheel, as a consequence of which no power is transmitted from the sun gear to the rotation shaft. Therefore, the pawl is always in engagement with the ratchet wheel and there is no need for the pawl to be disengaged from the ratchet wheel upon disconnection of the centrifugal clutches. The pawl is pivotally mounted on a stationary member and hence is not subjected to any centrifugal force.

According to the present invention there is provided an automatic transmission for connection between a drive shaft and a driven shaft and comprising: a planetary gear mechanism including a first gear to be driven by said drive shaft, a second gear operatively engaged with said first gear for transmitting speed change output to said driven shaft, and a third gear operatively engaged with said second gear to control the operation thereof; centrifugally operated clutch means for connecting said first gear and second gear for rotation together when, in operation, the rotational speed of said driven shaft exceeds a predetermined value; and a ratchet type one-way clutch means for permitting rotation of said third gear in the same direction as that of said drive shaft but preventing rotation in the reverse direction; characterised in that said ratchet type one-way clutch means comprises a ratchet pawl supporting plate fast with said third gear for rotation therewith, a fixed supporting member secured to a stationary member having annular ratchet teeth adjacent said ratchet pawl supporting plate, and at least two ratchet pawls pivotally supported on said supporting plate for undergoing engaging and disengaging movement relative to said ratchet teeth; and in that the pawls are relatively spaced on the supporting plate with respect to the ratchet teeth such that the pawls cannot engage the ratchet teeth concurrently. This automatic transmission is simple in construction, always provides positive engagement of the ratchet pawls with the ratchet teeth and provides precise automatic change-over of the speed changing operation. When the rotation speed of the supporting plate exceeds a predetermined level after connection of the centrifugally operated clutch means, the ratchet pawls are placed under centrifugal force out of engagement from the ratchet teeth, thus preventing generation of noise and excessive wear of the pawls and the ratchet teeth, which would otherwise be caused by contact of the pawls with the ratchet teeth. Subsequently, when the rotation speed of the supporting plate is reduced due to an increased load on the driven shaft to place the centrifugally operated clutch means into a disconnected condition, the second gear is disconnected from the first gear so that power is transmitted from the drive shaft to the driven shaft at a reduced rate. Upon disconnection of the second gear from the first gear, the third gear must be stopped in its rotation for speed reducing operation of the planetary gear mechanism. According to the relatively spaced disposition of the pawls with respect to the ratchet teeth wherein the pawls do not engage the ratchet teeth concurrently, at least one of the pawls can be securely brought into engagement with the ratchet teeth without repulsion upon reduction in rotation speed of the supporting plate, whereby the transmission may be shifted from the high speed-change rate to the low speed-change rate without fail, thus involving no power loss and minimising shock to ratchet pawls for increased durability thereof. This is in contradistinction to the pawls (43) disclosed in DE—B—25 54 433 which are mounted on the web which is comparable to a planetary gear support plate provided in constructions according to the invention as described hereinafter; which only act to transmit rotation force from the web to the drive wheel for starting the motor; and which never act to stop rotation of the sun gear during the speed-reducing operation of the planetary gear mechanism. It is also in contradistinction to the arrangement of the pawl in DER—B—24 54 433; which pawl is always in engagement with the ratchet wheel; is mounted on a stationary member; and is not subjected to centrifugal force.

GB—A—1 542 474 and FR—E—10.293 each disclose a ratchet mechanism in which two pawls are disposed in different engaging phase with respect to a ratchet wheel but each fails to show the characterising features of the present invention.

In a particular embodiment to be described hereinafter, the pawls are spaced on the supporting plate so that they are angularly offset with respect to the ratchet teeth by one-half of the pitch of one tooth.

In another particular arrangement, the pawls are disposed in two sets of respective pairs, the pawls in each pair being diametrically opposed on the supporting plate. The sets of pawls are spaced on the supporting plate so that the pawls of the sets are angularly offset with respect to the ratchet teeth by one-half of the pitch of one tooth.

For a better understanding of the invention and to show how the same may be carried into effect, reference will now be made, by way of example, to the accompanying drawings, in which:—

Figure 1 is a longitudinal sectional view, taken along line I—I in Figure 2, of an automatic transmission connected in a drive train of a small motorcycle,

Figure 2 is a sectional view taken along line II—II in Figure 1,

Figure 3 is a longitudinal sectional view of a principal portion of the transmission shown in Figure 1,

Figure 4 is a side view partially in section taken in the direction of arrow IV in Figure 3, and

Figure 5 is a cross-sectional view taken along line V—V in Figure 1.

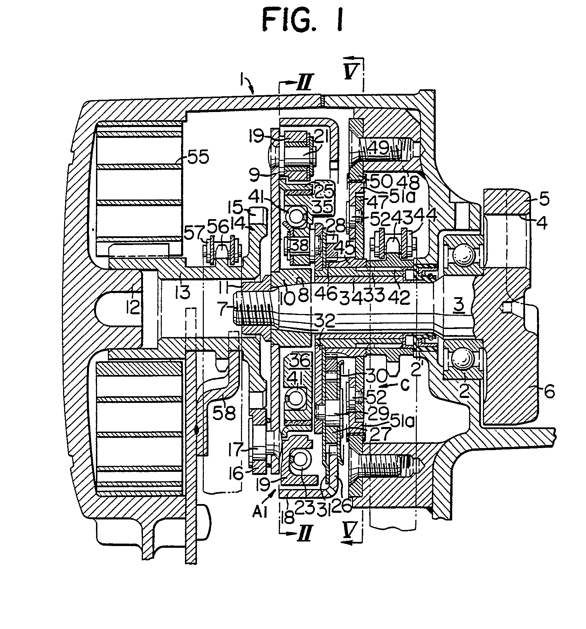

Referring to Figure 1, therein is seen a casing 1 having bearings 2 supporting a drive shaft 3. A seal member 2' seals the shaft 3 in the casing 1 which contains lubricating oil. A crank arm 5 having a crank pin supporting bore 4, and a counter weight 6, is mounted at the inner end portion of the drive shaft 3, i.e. at that end portion of the drive shaft 3 which is closer to a driving engine (not shown). The drive shaft 3 has screw threads 7 on the outer end portion thereof and a tapered surface 8 adjacent the threads 7. A boss member 10 fast with the central portion of a drive power transmission plate 9 is fitted around the tapered surface 8 and tightly secured thereto by a nut 11 engaged on the threads 7.

A ratchet pawl 16 is pivotally supported on a pin 17 on the outer side of the drive power transmission plate 9, i.e. on the side remote from the engine. The ratchet pawl 16 is engageable with ratchet teeth 15 when the engine is started, the ratchet teeth 15 being provided on the outer circumferential surface of a flange 14 formed at one end portion of a hollow engine-starting shaft 13 which is rotatably fitted at the other end portion thereof around a support shaft 12 projecting from the inner surface of a side wall of the casing 1 toward the drive shaft 3.

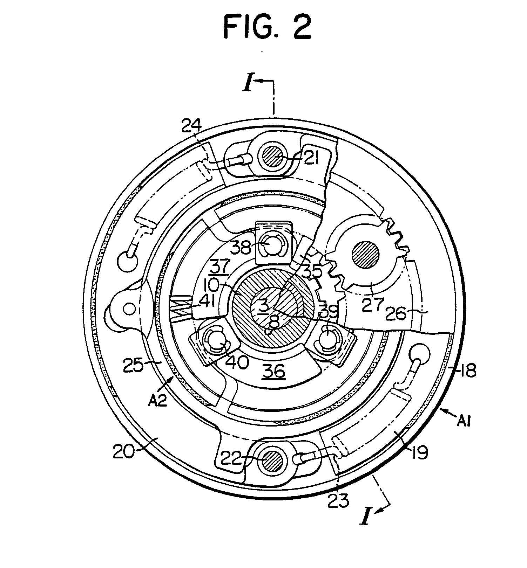

Referring to Figures 1 and 2, at the inner side of the drive power transmission plate 9, i.e. at the side closer to the engine, an outer annular contactor 18, and a pair of inner arcuate contactors 19, 20 constitute a first centrifugally operated clutch $A_1$. The inner arcuate contactors 19, 20 are pivotally supported on pins 21, 22 at respective base end portions which are located at diametrically opposed positions with respect to the outer annular contactor 18.

Each of the inner arcuate contactors 19, 20 is provided with a lining on the outer circumferential surface thereof for increasing the frictional force between the outer circumferential surface of the inner arcuate contactors 19, 20 and the inner circumferential surface of the outer annular contactor 18. Tension coil springs 23, 24 are provided between the front end portion of the inner arcuate contactor 19 and the base end portion of the inner arcuate contactor 20, and between the front end portion of the inner arcuate contactor 20 and the base end portion of the inner arcuate contactor 19. Due to the tension coil springs 23, 24, the inner arcuate contactors 19, 20, which are normally not pressed against the outer annular contactor 18, come into frictional contact with the outer annular contactor 18 due to centrifugal force when the rotational speed of the drive shaft 3 exceeds a predetermined value. At that time, the rotational movement of the drive shaft 3 is transmitted to the outer annular contactor 18.

An outer annular contactor 25, which constitutes a part of a second centrifugally operated clutch $A_2$ (to be described more fully later), is secured to a portion of the inner surface of the drive power transmission plate 9 at a location radially inwards of the inner arcuate contactors 19, 20.

Referring to Figures 1, 3 and 4, a ring gear 26, which constitutes a part of a planetary gear mechanism B, is formed integrally at its outer peripheral portion with the outer annular contactor 18. The ring gear 26 is engaged with three planetary gears 27, which are engaged with a sun gear 28. Each of the planetary gears 27 carries a pair of side plates 30, 31 on the opposite surfaces thereof. A planetary gear supporting pin 29 supports each of the planetary gears 27 rotatably and in spaced relationship on a planetary gear supporting plate 32. Pin 29 also supports the side plate 30 such that the side plate 30 can be rotated relative to the pin 29. The side plates 30, 31 extend beyond the outer periphery of the planetary gear 27 and up to both side surfaces of the ring gear 26 and sun gear 28, and relatively slidably hold the ring gear 26 and sun gear 28 at both side surfaces thereof such that the side plates 30, 31 cooperate with each other to suppress relative axial movements of the ring gear 26 and sun gear 28 with respect to the planetary gear 27. Each of the side plates 30 is of circular form and is concentric with the associated planetary gear 27. A peripheral portion of the side plate 30 is bent away from the side surface of the gear 27 so that the surface of side plate 30 facing gear 26 will be smooth so that relative sliding contact between the peripheral portion of the side plate 30 and the gear 26 is promoted. The side plate 31 consists of a one-piece plate extended over the three planetary gears 27. The ring gear 26 has an axial width less than that of the planetary gears 27. The peripheral portion of the side plate 31 is bent to elastically contact the side surface of the ring gear 26. As a result, the ring gear 26 is held by the side plates 30, 31 with elasticity.

A planetary gear supporting plate 32 is fixedly mounted on the outer circumferential surface of one end portion of a hollow driven shaft 33 fitted around the drive shaft 3 via a bearing 34. A sprocket 43 is mounted on the circumferential surface of the other end portion of the driven shaft 33 via a spline 42. The sprocket 43 is immersed in the lubricating oil sealed in the casing 1 and is operatively connected to a sprocket on a drive wheel via a drive chain 44.

Referring to Figures 1 and 2, the clutch $A_2$ further comprises three inner arcuate contactors 35, 36, 37 pivotally supported by pins 38, 39, 40 on the side surface of the planetary gear supporting plate 32 which is remote from the engine. Linings are provided on the outer circumferential surfaces of the inner arcuate contactors 35, 36, 37 for the purpose of increasing frictional force generated between the outer circumferential surfaces of the inner arcuate contactors 35, 36, 37 and the inner circumferential surface of the outer annular contactor 25. Each of the inner arcuate contactors 35, 36, 37 has a circumferentially extending groove, in which a coil spring 41 common to the contactors 35, 36, 37 is mounted. Due to the coil spring 41, the inner arcuate contactors 35, 36, 37, which are normally not pressed against the outer annular contactor 25, come into frictional contact therewith to provide direct coupling between the gears 27 and 26 by centrifugal force when the speed of orbital motion of the planetary gear 27, i.e. the rotational speed of the driven shaft 33, exceeds a predetermined value thereby to stop the relative rotation of the planetary gear 27 and drive shaft 3. At this time, the planetary gear 27 is not rotated around its own axis; the planetary gear 27 as well as drive shaft 3, inner arcuate contactors 19, 20, outer annular contactor 18, ring gear 26, planetary gear supporting plate 32 and driven shaft 33 are rotated together with the sun gear 28.

In the above-described planetary gear mechanism B, for example, the ring gear 26 constitutes a first gear of the transmission, the planetary gear 27 constitutes a second gear and the sun gear 28 constitutes a third gear. However, other combinations of the gears may be considered; for example, the ring gear 26 constituting a second or third gear, the planetary gear 27 constituing a third or first gear, and the sun gear 28 constituting a first or second gear.

The sun gear 28 is mounted via a spline 46 on the outer circumferential surface of the left end portion of a sleeve 45 which is mounted on the driven shaft 33 such that the sleeve 45 can be rotated relative to the driven shaft 33. A ratchet type one-way clutch C for controlling rotation of the sun gear 28 is interposed between the sleeve 45 and a fixed construction member constituted by a bracket 48 projecting from the inner surface of the casing 1.

The clutch C will be described in detail hereafter.

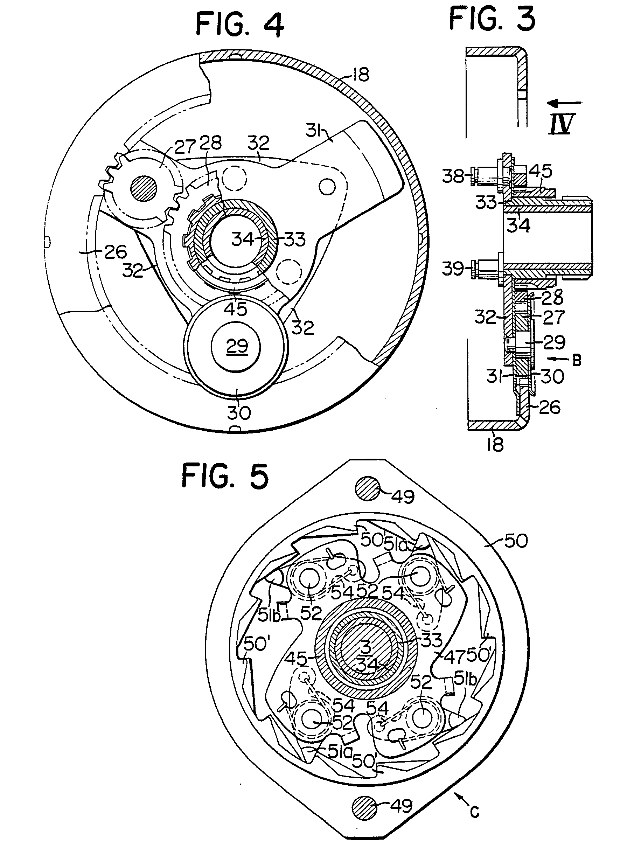

Referring to Figures 1 and 5, a ratchet pawl suporting plate 47 is fitted on and secured to the outer circumferential surface at the right end of the sleeve 45 and plate 47 is provided with a pair of diametrically opposed ratchet pawls 51a and 51b pivotally supported on plate 47 by pins 52. The bracket 48 has an annular supporting member 50 attached thereto by means of bolts 49, and the inner circumferential edge of member 50 is formed with a number of annularly disposed ratchet teeth 50' encircling the ratchet pawl supporting plate 47 such that each of the ratchet pawls 51a and 51b is adapted to be engaged with the ratchet teeth 50'. In this case, in the engaging phase, one pair of ratchet pawls is placed in coincidence with the ratchet teeth 50' whereas the other pair of ratchet pawls is displaced from the teeth by an amount preferably equal to one half of the pitch of the ratchet teeth 51'. Thus, as seen in Figure 5 the pair of ratchet pawls 51a is engaged with the ratchet teeth 50' while the pawls 51b are out of engagement with the teeth.

Each of the ratchet pawls 51, 51b is constantly biased so as to be engaged with the ratchet teeth 50' by a spring 54. When the ratchet pawls receive a rotational force exceeding a predetermined value in the same direction in which the drive shaft 3 is rotated, the ratchet pawls are completely disengaged from the ratchet teeth 50' so as to be swung by centrifugal force. In other words, when the inner arcuate contactors 35, 36, 37 come into frictional contact with the outer annular contactor 25 to allow the ring gear 26, planetary gear 27, sun gear 28 and driven shaft 33 to be rotated together with the drive shaft 3, the ratchet pawls 51 are swung away from the ratchet teeth 50' to positions where the ratchet pawls 51 are not in contact with the ratchet teeth 50'. Thereby, the ratchet pawls and teeth will not generate any meshing sounds therebetween when the drive shaft 3 is rotated at a high speed and there will be no reduction in speed.

Conversely, when the sun gear 28 comes close to being rotated in a direction opposite to the direction in which the drive shaft 3 is rotated, the ratchet pawls 51 safely come into engagement with the ratchet teeth 50' so that the rotation in the aforesaid direction of the sun gear 28 can be prevented.

Referring again to Figure 1, an energy-storing coil spring 55 is fastened at one end to the outer circumferential surface of the outer end portion of the hollow engine-starting shaft 13, and at the other end to the inner surface of the casing 1. An energy-storing transmission chain 57 is connected between a sprocket 56, integrally formed on the outer circumferential surface of the hollow engine-starting shaft 13, and a sprocket (not shown) cooperating with an engine starting pedal (not shown). The hollow engine-starting shaft 13 is supported and reinforced in a pressed manner by a reinforcing presser member 58.

In the above-described construction, the engine starting pedal is stepped on to rotate the hollow engine-starting shaft 13 via the energy storing transmission chain 57 so that energy is stored in the energy-storing coil spring 55. When energy stored in the spring 55 is released all at once, a rotational force is thereby generated, which is transmitted to the engine via the hollow engine-starting shaft 13, ratchet pawl 16, drive power transmission plate 9 and drive shaft 3, to start the engine.

When the engine is started, the rotational force generated thereby is transmitted to the drive shaft 3 and drive power transmission plate 9 so that the ratchet pawl 16 is disengaged from the ratchet teeth 15 by centrifugal force. When the rotational speed of the engine exceeds a predetermined value, the inner arcuate contactors 19, 20 come into frictional contact with the outer annular contactor 18. As a result, the rotation of the drive shaft 3 is transmitted to the drive wheel via the outer annular contactor 18, ring gear 26, planetary gear 27, planetary gear supporting plate 32, driven shaft 33, sprocket 43 and drive chain 44. While the rotation of the drive shaft 3 is thus transmitted to the drive wheel, the ratchet pawls 51 are engaged with the ratchet teeth 50' so that the sun gear 28 is not rotated. Thus, the rotation of the drive shaft 3 is reduced by rotation of the planetary gear 27 and transmitted to the driven shaft 33, which will be referred to as the first state.

When the rotational speed of the driven shaft 33 is further increased to reach high speed, the inner arcuate contactors 35, 36, 37 come into frictional contact with the outer annular contactor 25 so that the ring gear 26, planetary gear 27 and sun gear 28 are rotated with the drive shaft 3 in the same direction. As a result, the ratchet pawls 51a, 51b are disengaged from the ratchet teeth 50'. Consequently, the driven shaft 33 and sprocket 43 are rotated at the same speed as the drive shaft 3, and thus the speed ratio is 1:1, which will be referred to as the second state.

Next, in the event that the speed of rotation of the driven shaft 33 is reduced to a low speed due to an increase in load applied to the drive wheels so that the automatic transmission is returned from the second state to the first state, each of the ratchet pawls 51a, 51b is swung to be engaged with the ratchet teeth 50' under the bias of the springs 54. In this case, even if one pair of ratchet pawls 51a (or 51b) should impinge upon the tips of the ratchet teeth 50' to receive repulsion forces, the other pair of ratchet pawls 51b (or 51a) displaced in engag-

ing phase therefrom would assume a position on the inclined surface of the other ratchet teeth 50'. Thereby, the ratchet pawls can positively engage the ratchet teeth 50' by slight rotation of the ratchet pawl supporting plate 47 by an amount less than one pitch of the ratchet teeth 50'. As a consequence, rotation of the ratchet pawl suporting plate 47 and sun gear 28 may be prevented so that the transmission rapidly assumes the first state.

As described above, in the present transmission at least two ratchet pawls displaced in engaging phase with the ratchet teeth are pivotally supported on the ratchet pawl supporting plate associated with the third gear of the planetary gear mechanism. With this arrangement, when the automatic transmission is switched from the second state to the first state, either ratchet pawl can always engage the ratchet teeth positively without repulsion, whereby the transmission may be shifted to the first state without fail, thus involving no loss of power and minimizing engaging shock of the ratchet pawls thereby increasing the durability thereof.

**Claims**

1. An automatic transmission for connection between a drive shaft (3) and a driven shaft (33) and comprising: a planetary gear mechanism (B) including a first gear (26) to be driven by said drive shaft, a second gear (27) operatively engaged with said first gear for transmitting speed change output to said driven shaft, and a third gear (28) operatively engaged with said second gear to control the operation thereof; centrifugally operated clutch means (A₁, A₂) for connecting said first gear and second gear for rotation together when, in operation, the rotational speed of said driven shaft exceeds a predetermined value; and a ratchet type one-way clutch means (C) for permitting rotation of said third gear in the same direction as that of said drive shaft but preventing rotation in the reverse direction; characterised in that said ratchet type one-way clutch means comprises a ratchet pawl supporting plate (47) fast with said third gear for rotation therewith, a fixed supporting member (50) secured to a stationary member (1) having annularly disposed ratchet teeth (50') adjacent said ratchet pawl supporting plate, and at least two ratchet pawls (51a, 51b) pivotally suported on said supporting plate for undergoing engaging and disengaging movement relative to said ratchet teeth; and in that the pawls (51a, 51b) are relatively spaced on the supporting plate (47) with respect to the ratchet teeth (50') such that the pawls cannot engage the ratchet teeth concurrently.

2. An automatic transmission as claimed in claim 1, wherein each of the pawls (51a, 51b) has a centre of gravity offset from its pivot point (52) relative to the supporting plate (47).

3. An automatic transmission as claimed in claim 2 and comprising spring means (54) of a relative weak spring force for biasing the pawls (51a, 51b) in a direction engaging the ratchet teeth (50').

4. An automatic transmission as claimed in any one of the preceding claims, wherein the pawls (51a, 51b) are arranged in at least two sets of respective pairs of pawls, the pawls in each pair being diametrically opposed on the supporting plate (47), the pair of pawls in each set being arranged to engage the ratchet teeth (50') concurrently while the pair of pawls in the other set are disengaged from the ratchet teeth.

5. An automatic transmission as claimed in any one of the preceding claims, wherein the ratchet type clutch (C) is disposed between the third gear (28) of the planetary gear mechanism and the stationary member (1).

6. An automatic transmission as claimed in claim 1, wherein the ratchet teeth (50') have a regular pitch and the pawls (51a, 51b) are spaced on the supporting plate (47) so that at least two pawls are angularly offset with respect to one another by one-half of the pitch of the ratchet teeth.

7. An automatic transmission as claimed in claim 4, wherein the ratchet teeth (50') have a regular pitch and the pawls (51a, 51b) of the sets are spaced on the supporting plate (47) so that the pawls of one set are angularly offset by one-half of the pitch with respect to the pawls of another set.

**Revendications**

1. Transmission automatique assurant la liaison entre un arbre menant (3) et un arbre mené (33) et comprenant: un mécanisme (B) à engrenage planétaire comprenant un premier pignon (26) devant être entraîné par ledit arbre menant, un deuxième pignon (27) en prise efficace avec ledit premier pignon en vue de transmettre audit arbre mené la puissance de sortie de changement de vitesse, et un troisième pignon (28) en prise efficace avec ledit deuxième pignon pour commander le fonctionnement de ce dernier; un dispositif d'accouplement (A₁, A₂) actionné par la force centrifuge pour relier lesdits premier et deuxième pignons afin qu'ils tournent ensemble lorsque, en service, la vitesse de rotation dudit arbre mené excède une valeur prédéterminée; et un dispositif d'actionnement unidirectionnel (C) du type à rochet pour autoriser le rotation dudit troisième pignon dans la même direction que ledit arbre menant, mais pour empêcher sa rotation dans la direction inverse; caractérisée par le fait que ledit dispositif d'actionnement unidirectionnel du type à rochet comprend une plaque (47) de support de cliquets assujettie audit troisième pignon pour tourner avec lui, un organe fixe de support (50) assujetti à un élément stationnaire (1) et présentant des dents de rochet (50') agencées annulairement et adjacentes à ladite plaque de support des cliquets, et au moins deux cliquets (51a, 51b) supportés à pivotement par ladite plaque de support pour effectuer des mouvements d'engrènement et de désengrènement par rapport auxdites dents de rochet; et par le fait que les cliquets (51a, 51b) song relativement espacés sur le plaque de support (47) par rapport aux dents de rochet (50'), de telle sorte que les cliquets ne puissent pas venir concomitamment en prise avec les dents de rochet.

2. Transmission automatique selon la revendication 1, dans laquelle chacun des cliquets (51a, 51b) présente un centre de gravité décalé de son point de pivotement (52) per rapport à la plaque de support (47).

3. Transmission automatique selon le revendication 2 et comportant des moyens élastiques (54) de force élastique relativement faible pour charger les cliquets (51a, 51b) dans une direction d'engrènement avec les dents de rochet (50').

4. Transmission automatique selon l'une quelconque des revendications précédentes, dans laquelle les cliquets (51a, 51b) sont agencés en au moins deux jeux de paires respectives de cliquets, les cliquets de chaque paire étant diamétralement opposés sur la plaque de support (47), la paire de cliquets de chaque jeu étant destinée à venir en prise avec les dents de rochet (50') à l'instant même où la paire de cliquets de l'autre jeu est désaccouplée des dents de rochet.

5. Transmission automatique selon l'une quelconque des revendications précédentes, dans laquelle l'accouplement (C) du type à rochet est intercalé entre le troisième pignon (28) du mécanisme à engrenage planétaire et l'élément stationnaire (1).

6. Transmission automatique selon la revendication 1, dans laquelle les dents de rochet (50') ont un pas régulier et les cliquets (51a, 51b) sont espacés sur la plaque de support (47) de telle manière qu'au moins deux cliquets soient décalés angulairement l'un par rapport à l'autre de la moitié du pas des dents de rochet.

7. Transmission automatique selon la revendication 4, dans laquelle les dents de rochet (50') ont un pas régulier et les cliquets (51a, 51b) des jeux sont espacés, sur la plaque de support (47), de telle manière que les cliquets d'un jeu soient décalés angulairement de la moitié du pas par rapport aux cliquets d'un autre jeu.

**Patentansprüche**

1. Automatisches Getriebe zur Verbindung einer Antriebswelle (3) mit einer Abtriebswelle (33), mit einem Planetengetriebe (B), das ein erstes (26), ein zweites (27) und ein drittes (28) Zahnrad hat, wobei das erste Zahnrad (26) von der Antriebswelle (3) anzutreiben ist, wobei das zweite Zahnrad (27) mit dem ersten Zahnrad (26) antreibend in Eingriff ist, um eine Geschwindigkeitsveränderung der Abtriebswelle (33) zu bewirken und wobei das dritte Zahnrad (28) antreibend mit dem zweiten Zahnrad (27) in Eingriff ist, um dessen Betriebsweise zu steuern; mit mit Zentrifugalkraft arbeitenden Kupplungen (A$_1$, A$_2$) für ein Verbinden des ersten Zahnrades (26) mit dem zweiten Zahnrad (27) für gemeinsame Rotation, wobei im Betrieb diese Verbindung dann wirksam wird, wenn die Umdrehungsgeschwindigkeit der Abtriebswelle (33) einen vorgegebenen Wert übersteigt, und mit einer in einer Umdrehungsrichtung wirkenden Ratschenkupplung (C), die für das dritte Zahnrad (28) Rotation in gleicher Richtung wie die Rotation der Antriebswelle (3) zuläßt, jedoch Rotation in dazu entgegengesetztem Umdrehungssinn verhindert, gekennzeichnet dadurch, daß die Ratschenkupplung (C) umfaßt:

eine Sperrklinken-Grundplatte (47), die mit dem dritten Zahnrad (28) für gemeinsame Umdrehung fest verbunden ist,

ein feststehendes Befestigungsteil (50), das an einem feststehenden Teil (1) des Getriebes befestigt ist und das benachbart der Sperrklinken-Grundplatte (47) ringförmig verteilte Ratschenzähne (50') besitzt, und wenigstens zwei Sperrklinken (51a, 51b), die schwenkbar an der Sperrklinken-Grundplatte (47) angebracht sind und die in die Ratschenzähne (50') eingreifen können, und dadurch, daß die Sperrklinken (51a, 51b) auf der Sperrklinken-Grundplatte (47), bezogen auf die Ratschenzähne (50'), derart im Abstand voneinander angeordnet sind, daß die Sperrklinken nicht zusammen gleichzeitig in Ratschenzähne (50') eingreifen können.

2. Getriebe nach Anspruch 1, gekennzeichnet dadurch, daß eine jede der Sperrklinken (51a, 51b) ihren Massenschwerpunkt versetzt außerhalb ihrer auf der Sperrklinken-Grundplatte (47) befindlichen Schwenkachse hat.

3. Getriebe nach Anspruch 2, gekennzeichnet dadurch, daß Federn (54) mit relativ schwacher Federkraft so vorgesehen sind, daß sie die Sperrklinken (51a, 51b) in der Richtung vorspannen, in der diese Sperrklinken mit den Ratschenzähnen (50) in Eingriff kommen.

4. Getriebe nach einem der Ansprüche 1, 2 oder 3, gekennzeichnet dadurch, daß die Sperrklinken (51a, 51b) in wenigstens zwei Sätzen jeweils paarweiser Sperrklinken angeordnet sind, wobei die Sperrklinken eines jeden Paares auf der Sperrklinken-Grundplatte (47) zueinander diametral einander gegenüberliegend angeordnet sind und wobei die Sperrklinkenpaare eines jeden Satzes so angecrdnet sind, daß sie gleichzeitig in die Ratschenzähne (50') eingreifen, wohingegen die Sperrklinken des Paares des anderen Satzes nicht in Eingriff mit den Ratschenzähnen sind.

5. Getriebe nach einem der Ansprüche 1, 2, 3 oder 4, gekennzeichnet dadurch, daß die Ratschenkupplung (C) zwischen dem dritten Zahnrad (28) des Planetengetriebes (B) und den feststehenden Teil (1) des Getriebes eingefügt ist.

6. Getriebe nach Anspruch 1, gekennzeichnet dadurch, daß die Ratschenzähne (50') eine regelmäßige Zahnteilung haben und daß die Sperrklinken (51a, 51b) auf der Sperrklinken-Grundplatte (47) derart im Abstand voneinander angeordnet sind, daß wenigstens zwei Sperrklinken zueinander im Winkel einer halben Zahnteilung der Ratschenzähne versetzt sind.

7. Getriebe nach Anspruch 4, gekennzeichnet dadurch, daß die Ratschenzähne (50') eine regelmäßige Teilung haben und daß die Sperrklinken (51a, 51b) der Sätze auf der Sperrklinken-Grundplatte (47) derart in Abständen voneinander angeordnet sind, daß die Sperrklinken eines Satzes zu den Sperrklinken eines anderen Satzes im Winkel einer halben Zahnteilung versetzt sind.

FIG. 1

# FIG. 2

## FIG. 4

## FIG. 3

## FIG. 5